# EUROPÄISCHE PATENTANMELDUNG

(11) **EP 1 408 388 A1**
(43) Veröffentlichungstag der Anmeldung: **14.04.2004**
(21) Anmeldenummer: 03015657.4
(22) Anmeldetag: 17.07.2003
(51) Int. Cl.: G05D 7/06, F04B 49/22, F02M 63/02, F02M 59/46, F02M 59/34

(54) **Durchflussregeleinrichtung, insbesondere für eine Kraftstoffeinspritzeinrichtung einer Brennkraftmaschine**

(30) Priorität: 09.10.2002 DE 10247145
(71) Anmelder: ROBERT BOSCH GMBH, 70442 Stuttgart (DE)
(72) Erfinder: Krimmer, Erwin, 73655 Pluederhausen (DE); Wessner, Jochen, 73728 Esslingen (DE); Klink, Wolfgang, 71332 Waiblingen (DE); Miehle, Tilman, 71334 Waiblingen (DE); Keimer, Hermann, 71364 Winnenden (DE)

(57) **Zusammenfassung**

Die Durchflussregeleinrichtung weist ein Durchflussregelventil (48) und einen elektromagnetischen Aktor (46) zu dessen Betätigung auf. Der Aktor (46) weist einen in einem Gehäuse (50) innerhalb einer Magnetspule (52) verschiebbar geführten Magnetanker (60) auf, durch den zumindest mittelbar ein in einem an das Gehäuse (50) anschließenden Ventilgehäuse (68) geführtes Ventilglied (82) des Durchflussregelventils (48) verschiebbar ist, durch das unterschiedlich grosse Durchflussquerschnitte einstellbar sind. In das Gehäuse (50) ist innerhalb der Magnetspule (52) eine Hülse (54) eingesetzt, die sich zumindest annähernd über die gesamte Länge des Magnetankers (60) erstreckt und in der der Magnetanker (60) geführt ist.

## Beschreibung

### Stand der Technik

Die Erfindung geht aus von einer Durchflussregeleinrichtung, insbesondere für eine Kraftstoffeinspritzeinrichtung einer Brennkraftmaschine nach der Gattung des Anspruchs 1.

Eine solche Durchflussregeleinrichtung ist durch die DE 198 53 103 A1 bekannt. Die Durchflussregeleinrichtung ist Bestandteil einer Kraftstoffeinspritzeinrichtung einer Brennkraftmaschine und dient dazu, zwischen einer Förderpumpe und einer Hochdruckpumpe einen variablen Durchflussquerschnitt für den von der Förderpumpe zur Hochdruckpumpe geförderten Kraftstoff einzustellen. Diese Durchflussregeleinrichtung weist ein Durchflussregelventil und einen elektromagnetischen Aktor für dessen Betätigung auf. Der Aktor weist einen in einem Gehäuse innerhalb einer Magnetspule verschiebbar geführten Magnetanker auf, durch den ein in einem an das Gehäuse anschließenden Ventilgehäuse geführtes Ventilglied des Durchflussregelventils verschiebbar ist, durch das unterschiedlich grosse Durchflussquerschnitte einstellbar sind. Der Magnetanker ist über in das Gehäuse und das Ventilgehäuse eingepresste Lagerbuchsen geführt. Diese Lagerbuchsen weisen jeweils nur eine geringe Länge auf, wodurch nur eine ungenaue Führung des Magnetankers erreicht wird. Der Magnetanker kann sich daher bei dessen Verschiebung Verkippen oder Verkanten, was zu einem hohen Verschleiss des Magnetankers und damit zu einer nicht ausreichenden Lebensdauer der Durchflussregeleinrichtung führt.

### Vorteile der Erfindung

Die erfindungsgemäße Durchflussregeleinrichtung mit den Merkmalen gemäß Anspruch 1 hat demgegenüber den Vorteil, dass der Magnetanker über eine grosse Länge in der Hülse geführt wird, wodurch ein Verkippen oder Verkanten des Magnetankers vermieden wird und dieser nur einen geringen Verschleiss aufweist und entsprechend eine lange Lebensdauer der Durchflussregeleinrichtung erreicht wird.

In den abhängigen Ansprüchen sind vorteilhafte Ausgestaltungen und Weiterbildungen der erfindungsgemäßen Kraftstoffeinspritzeinrichtung angegeben. Die Merkmale gemäß den Ansprüchen 2 und 3 ermöglichen eine einfache Abdichtung der Durchflussregeleinrichtung, bei der nur zwischen dem Ventilgehäuse und der Hülse ein Dichtelement erforderlich ist.

### Zeichnung

Ein Ausführungsbeispiel der Erfindung ist in der Zeichnung dargestellt und in der nachfolgenden Beschreibung näher erläutert. Es zeigen Figur 1 eine Kraftstoffeinspritzeinrichtung für eine Brennkraftmaschine in schematischer Darstellung, Figur 2 in vergrösserter Darstellung eine Durchflussregeleinrichtung der Kraftstoffeinspritzeinrichtung und Figur 3 in weiter vergrösserter Darstellung eine Hülse der Durchflussregeleinrichtung.

### Beschreibung des Ausführungsbeispiels

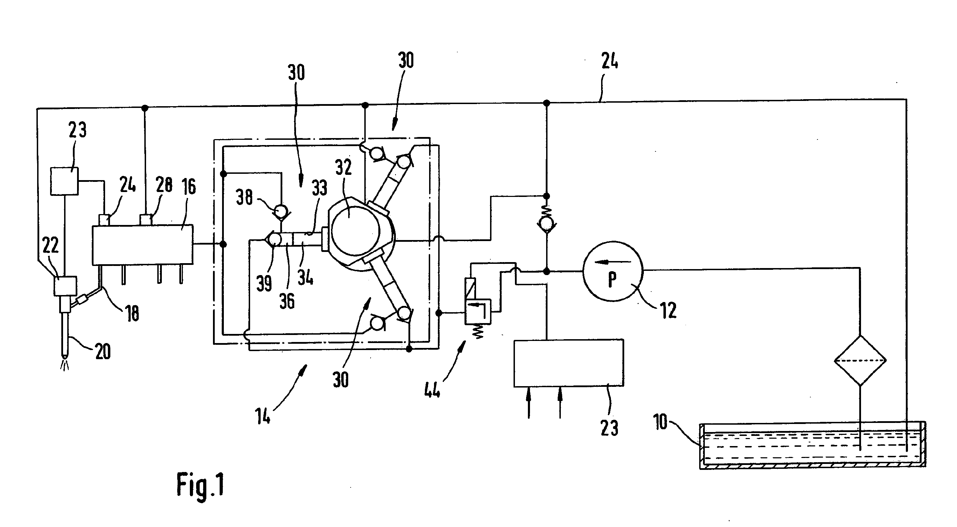

In Figur 1 ist eine Kraftstoffeinspritzeinrichtung für eine Brennkraftmaschine beispielsweise eines Kraftfahrzeugs dargestellt. Die Brennkraftmaschine ist vorzugsweise eine selbstzündende Brennkraftmaschine und weist einen oder mehrere Zylinder auf. Das Kraftfahrzeug weist einen Kraftstoffvorratsbehälter 10 auf, in dem Kraftstoff für den Betrieb der Brennkraftmaschine bevorratet ist. Die Kraftstoffeinspritzeinrichtung weist eine Förderpumpe 12 auf, durch die Kraftstoff aus dem Kraftstoffvorratsbehälter 10 zu wenigstens einer Hochdruckpumpe 14 gefördert wird. Die Hochdruckpumpe 14 fördert Kraftstoff in einen Speicher 16, der beispielsweise rohrförmig oder in beliebiger anderer Form ausgebildet sein kann. Vom Speicher 16 führen Leitungen 18 zu an den Zylindern der Brennkraftmaschine angeordneten Injektoren 20 ab. An den Injektoren 20 ist jeweils ein elektrisches Steuerventil 22 angeordnet, durch das eine Öffnung der Injektoren gesteuert wird, um so eine Kraftstoffeinspritzung durch den jeweiligen Injektor 20 zu bewirken oder eine Kraftstoffeinspritzung zu verhindern. Die Steuerventile 22 werden durch eine elektronische Steuereinrichtung 23 angesteuert, durch die in Abhängigkeit von Betriebsparametern der Brennkraftmaschine, wie beispielsweise Drehzahl, Last, Temperatur und weiteren, der Zeitpunkt und die Dauer der Kraftstoffeinspritzung durch die Injektoren 20 bestimmt wird. Von den Injektoren 20 führt ein Rücklauf für nicht verbrauchten Kraftstoff zumindest mittelbar beispielsweise über eine für alle Injektoren gemeinsame Leitung 24 in einen zum Kraftstoffvorratsbehälter 10 führenden Rücklauf. Vom Speicher 16 kann ebenfalls eine Leitung 26 als Rücklauf zum Kraftstoffvorratsbehälter 10 zurückführen, in der ein Druckbegrenzungsventil 28 angeordnet ist, um zu verhindern, daß sich im Speicher 16 ein unzulässig hoher Druck aufbaut.

Die Hochdruckpumpe 14 wird mechanisch durch die Brennkraftmaschine und damit proportional zur Drehzahl der Brennkraftmaschine angetrieben. Die Förderpumpe 12 kann ebenfalls mechanisch durch die Brennkraftmaschine angetrieben werden, wobei für die Hochdruckpumpe 14 und die Förderpumpe 12 eine gemeinsame Antriebswelle vorgesehen sein kann. Die Förderpumpe 12 kann alternativ auch beispielsweise einen elektromotorischen Antrieb aufweisen.

Die Hochdruckpumpe 14 kann als Radialkolbenpumpe ausgebildet sein und weist wenigstens ein, vorzugsweise mehrere mit gleichmäßigem Winkelabstand voneinander angeordnete Pumpenelemente 30 auf, die jeweils einen durch einen Polygon 32 in Verbindung mit einer Exzenterwelle in einer Hubbewegung angetriebenen, in einer Zylinderbohrung 33 geführten Pumpenkolben 34 aufweisen, der einen Pumpenarbeitsraum 36 begrenzt. In der Verbindung des Pumpenarbeitsraums 36 mit dem Speicher 16 ist ein zum Speicher 16 hin öffnendes Rückschlagventil 38 als Auslassventil angeordnet, durch das die Trennung zwischen dem Pumpenarbeitsraum 36 und dem Speicher 16 beim Saughub des Pumpenkolbens 34 erfolgt. In der Verbindung des Pumpenarbeitsraums 36 mit der Förderpumpe 12 ist ein zum Pumpenarbeitsraum 36 hin öffnendes Rückschlagventil 39 als Saugventil angeordnet, durch das die Trennung zwischen dem Pumpenarbeitsraum 36 und der Förderpumpe 12 beim Förderhub des Pumpenkolbens 34 erfolgt. Während eines jeweiligen Saughubs des Pumpenkolbens 34, wenn dieser sich radial nach innen bewegt, ist der Pumpenarbeitsraum 36 bei geöffnetem Saugventil 39 mit dem Auslass der Förderpumpe 12 verbunden und wird mit Kraftstoff befüllt, wobei der Pumpenarbeitsraum 36 durch das geschlossene Auslassventil 38 vom Speicher 16 getrennt ist. Während eines jeweiligen Förderhubs des Pumpenkolbens 34, wenn dieser sich radial nach außen bewegt, ist der Pumpenarbeitsraum 36 bei geöffnetem Auslassventil 38 mit dem Speicher 16 verbunden und durch das geschlossene Saugventil 39 vom Auslass der Förderpumpe 12 getrennt.

Zwischen der Förderpumpe 12 und dem Kraftstoffvorratsbehälter 10 sind vorzugsweise ein oder mehrere Filter angeordnet. Es kann beispielsweise ausgehend vom Kraftstoffvorratsbehälter 10 zunächst ein Grobfilter 40 und diesem nachgeordnet ein Feinfilter 42 vorgesehen sein, wobei der Feinfilter 42 oder der Grobfilter 40 zusätzlich einen Wasserabscheider aufweisen kann.

Zwischen der Förderpumpe 12 und der Hochdruckpumpe 14 ist eine Durchflussregeleinrichtung 44 angeordnet. Durch die Durchflussregeleinrichtung 44 ist ein variabler Durchflussquerschnitt in der Verbindung zwischen der Förderpumpe 12 und der Hochdruckpumpe 14 einstellbar. Die Durchflussregeleinrichtung 44 wird durch die Steuereinrichtung 23 angesteuert, in der Weise, dass durch die Förderpumpe 12 eine Kraftstoffmenge der Hochdruckpumpe 14 zugeführt wird, die dann wiederum durch die Hochdruckpumpe 14 unter Hochdruck in den Speicher 16 gefördert wird, um im Speicher 16 einen vorgegebenen, von Betriebsparametern der Brennkraftmaschine abhängigen Druck aufrechtzuerhalten. Am Speicher 16 ist dabei ein Drucksensor 17 angeordnet, der mit der Steuereinrichtung 23 verbunden ist und dieser ein Signal für den tatsächlichen Druck im Speicher 16 zuführt.

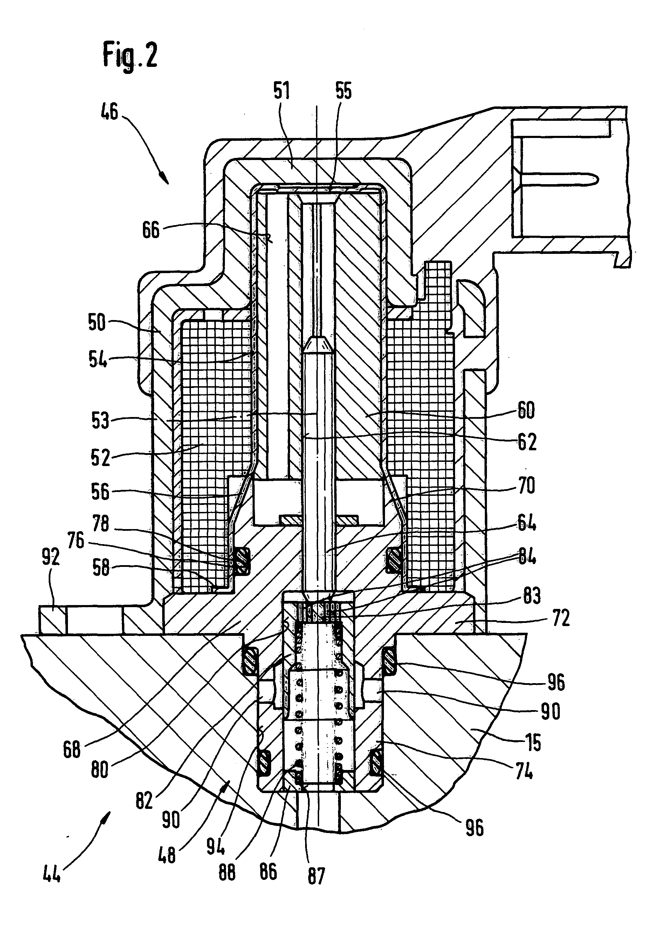

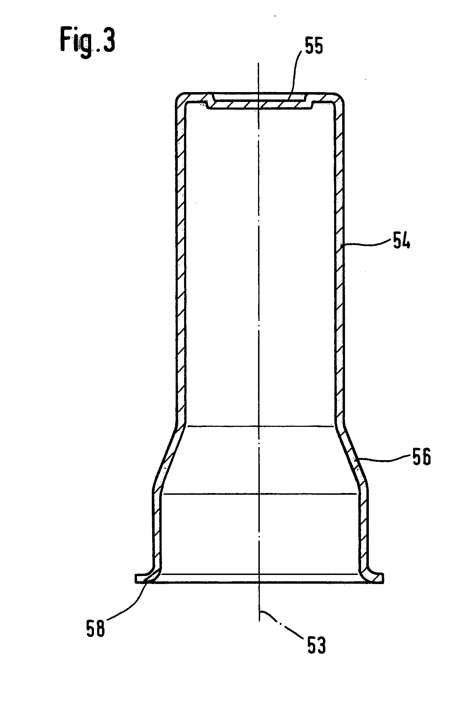

Nachfolgend wird anhand der Figuren 2 und 3 die Durchflussregeleinrichtung 44 näher erläutert. Die Durchflussregeleinrichtung 44 weist einen elektromagnetischen Aktor 46 und ein durch diesen betätigtes Durchflussregelventil 48 auf. Die Durchflussregeleinrichtung 44 weist ein etwa hohlzylinderförmiges, topfförmiges Gehäuse 50 auf, das im Durchmesser gestuft ausgebildet ist. Das Gehäuse 50 weist zu seinem geschlossenen Boden 51 hin einen kleineren Durchmesser auf als zu seinem offenen Ende hin. In den im Durchmesser grösseren Abschnitt des Gehäuses 50 ist eine etwa hohlzylinderförmige Magnetspule 52 eingesetzt, deren Innendurchmesser in einem dem Boden 51 des Gehäuses 50 zugewandten Abschnitt zumindest annähernd gleich gross ist wie der Innendurchmesser des im Durchmesser kleineren Abschnitts des Gehäuses 50. In einem dem offenen Ende des Gehäuses 50 zugewandten Abschnitt weist die Magnetspule 52 einen vergrösseren Innendurchmesser auf. In das Gehäuse 50 ist eine Hülse 54 eingesetzt, die durch die Magnetspule 52 hindurchtritt und bis zum Boden 51 des Gehäuses 50 reicht. Die Hülse 54 ist topfförmig ausgebildet und ist mit ihrem Boden 55 benachbart zum Boden 51 des Gehäuses 50 angeordnet. Zum offenen Ende des Gehäuses 50 hin weist die Hülse 54 eine trichterförmige Erweiterung 56, an diese anschließend einen Abschnitt mit grösserem Durchmesser und an diesen wiederum anschließend einen nach aussen gebogenen Flansch 58 auf. Mit dem Flansch 58 kommt die Hülse 54 in Richtung ihrer Längsachse 53 an der Magnetspule 52 zur Anlage. Die Hülse 54 ist aus Metall, insbesondere Bronze oder Stahl, vorzugsweise nichtrostendem Stahl, hergestellt.

In der Hülse 54 ist mit geringem Spiel ein Magnetanker 60 des Aktors 46 in Richtung der Längsachse 53 der Hülse 54, die gleich der Längsachse des Magnetankers 60 ist, verschiebbar geführt. Der Magnetanker 60 ist etwa zylinderförmig ausgebildet und weist eine zentrale Bohrung 62 auf, die eine Durchgangsbohrung oder eine von der offenen Seite des Gehäuses 50 her ausgehende Sackbohrung sein kann. In die Bohrung 62 ist ein zum offenen Ende des Gehäuses 50 hin aus dieser herausragender Stößel 64 eingesetzt, insbesondere eingepresst. Der Magnetanker 60 weist ausserdem eine weitere aussermittige Durchgangsbohrung 66 auf, durch die die durch den Magnetanker 60 beiderseits in der Hülse 54 begrenzten Räume miteinander verbunden sind.

Das Durchflussregelventil 48 weist ein Ventilgehäuse 68 auf, das sich an das Gehäuse 50 anschliesst. Das Ventilgehäuse 68 weist einen in den Endbereich der Hülse 54 mit dem vergrösserten Durchmesser ragenden Abschnitt 70 auf, der sich im Durchmesser entsprechend der Erweiterung 56 der Hülse 54 verringert. Das Ventilgehäuse 68 weist ausserdem einen im Durchmesser vergrösserten Flansch 72 auf, der in den Endbereich des Gehäuses 50 eintaucht und mit diesem dicht verbunden ist. An den Flansch 72 anschliessend weist das Ventilgehäuse 68 einen aus dem Gehäuse 50 ragenden Fortsatz 74 auf. Im Aussenmantel des Abschnitts 70 des Ventilgehäuses 68 ist eine umlaufende Ringnut 76 eingebracht, in die ein elastischer Dichtring 78 eingelegt ist, der eine Abdichtung zwischen dem Ventilgehäuse 68 und der Hülse 54 sicherstellt. Das Ventilgehäuse 68 besteht vorzugsweise aus Metall und bildet zugleich den Magnetkern des Aktors 46.

Das Ventilgehäuse 68 weist eine Durchgangsbohrung 80 auf, die zumindest annähernd koaxial zum Stößel 64, dem Magnetanker 60 und der Hülse 54 verläuft. Die Durchgangsbohrung 80 ist im Durchmesser gestuft ausgebildet und weist zum Magnetanker 80 hin einen verkleinerten Durchmesser auf. Durch den Bereich der Durchgangsbohrung 80 mit verkleinertem Durchmesser tritt der Stößel 64 hindurch. In der Durchgangsbohrung 80 des Ventilgehäuses 68 ist ein als topfförmiger Kolben ausgebildetes Ventilglied 82 des Durchflussregelventils 48 verschiebbar geführt. Das Ventilglied 82 weist mit seinem Boden 83 zum Stößel 64, wobei der Stößel 64 am Boden 83 anliegt. Der Boden 83 kann eine oder mehrere Öffnungen 84 aufweisen. In die Durchgangsbohrung 80 des Ventilgehäuses 80 ist von aussen her eine Stützscheibe 86 eingesetzt, beispielsweise eingepresst, die eine Durchgangsöffnung 87 aufweist. Das Ventilglied 82 weist mit seinem offenen Ende zur Stützscheibe 86 hin und zwischen dem Boden 83 des Ventilglieds 82 und der Stützscheibe 86 ist eine vorgespannte Feder 88, beispielsweise in Form einer Schraubendruckfeder angeordnet. Durch die Feder 88 wird das Ventilglied 82 zum Stößel 64 hin gedrückt.

Am Umfang des Fortsatzes 74 des Ventilgehäuses 68 sind wenigstens eine, vorzugsweise mehrere über den Umfang des Fortsatzes 74 verteilt angeordnete Öffnungen 90 vorgesehen, die in die Durchgangsbohrung 80 des Ventilgehäuses 68 münden. Die Öffnungen 90 sind entweder mit der Saugseite der Hochdruckpumpe 14 oder mit dem Auslass der Förderpumpe 12 verbunden. Die Durchgangsbohrung 82 ist durch die Durchgangsöffnung 87 in der Stützscheibe 86 entweder mit dem Auslass der Förderpumpe 12 oder mit der Saugseite der Hochdruckpumpe 14 verbunden. Durch das Ventilglied 82 wird abhängig von dessen Stellung in Richtung der Längsachse 53 ein unterschiedlich grosser Durchflussquerschnitt zwischen der Durchgangsbohrung 80 und den Öffnungen 90 und damit in der Verbindung zwischen dem Auslass der Förderpumpe 12 und der Saugseite der Hochdruckpumpe 14 eingestellt. Wenn der Aktor 46 nicht bestromt ist, so wirkt auf den Magnetanker 60 keine Magnetkraft, so dass das Ventilglied 82 durch die Feder 88 in einer axialen Stellung gehalten wird, in der die Mündungen der Öffnungen 90 in die Durchgangsbohrung 80 zum grössten Teil freigegeben sind, so dass ein maximaler Durchflussquerschnitt in der Verbindung zwischen der Förderpumpe 12 und der Hochdruckpumpe 14 durch das Durchflussregelventil 46 eingestellt ist. Mit zunehmender Stromstärke, mit der der Aktor 46 bestromt wird, wirkt auf den Magnetanker 60 eine grössere, der Feder 88 entgegenwirkende magnetische Kraft, wobei über den Stößel 64 das Ventilglied 82 gegen die Kraft der Feder 88 zur Stützscheibe 86 hin verschoben wird. Dabei werden durch das Ventilglied 82 zunehmend die Mündungen der Öffnungen 90 in die Durchgangsbohrung 80 verdeckt und somit ein immer kleinerer Durchflussquerschnitt in der Verbindung zwischen der Förderpumpe 12 und der Hochdruckpumpe 14 eingestellt. Wenn durch das Ventilglied 82 die Mündungen der Öffnungen 90 in die Durchgangsbohrung 80 vollständig verdeckt werden, so wird durch das Durchflussregelventil 48 der Durchflussquerschnitt in der Verbindung zwischen der Förderpumpe 12 und der Hochdruckpumpe 14 ganz verschlossen, so dass durch die Hochdruckpumpe 14 kein Kraftstoff mehr angesaugt wird.

Der Magnetanker 60 wird bei dessen Bewegung in Richtung der Längsachse 53 in der Hülse 54 zumindest annähernd auf seiner gesamten Länge geführt, so dass sichergestellt ist, dass sich der Magnetanker 60 nicht Verkippen oder Verkanten kann. Durch die Öffnungen 84 im Boden 83 des Ventilglieds 82 ist sichergestellt, dass dieses druckausgeglichen ist. Zwischen der Durchgangsbohrung 80 des Ventilgehäuses 68 und dem Stößel 64 ist ein kleiner Ringspalt vorhanden, durch den Kraftstoff auch in das Innere der Hülse 54 gelangen kann. Die Durchgangsbohrung 66 im Magnetanker 60 ermöglicht eine Durchströmung des Magnetankers 60 bei dessen axialer Bewegung in der kraftstoffgefüllten Hülse 54.

Das Gehäuse 50 weist beispielsweise an seinem offenen Ende einen Flansch 92 auf, über den es beispielsweise an einem Gehäuse 15 der Hochdruckpumpe 14 befestigt ist. Das Ventilgehäuse 68 ragt mit seinem Fortsatz 74 in eine Bohrung 94 im Gehäuse 14 der Hochdruckpumpe 14 hinein, wobei zur Abdichtung ein oder zwei Dichtringe 96 zwischen dem Fortsatz 74 und der Bohrung 94 angeordnet sind. Im Gehäuse 15 der Hochdruckpumpe 14 sind Kanäle ausgebildet, durch die die Verbindungen der Durchgangsbohrung 80 und der Öffnungen 90 des Ventilgehäuses 68 mit dem Auslass der Förderpumpe 12 bzw. der Saugseite der Hochdruckpumpe 14 hergestellt werden.

## Patentansprüche

1. Durchflussregeleinrichtung, insbesondere für eine Kraftstoffeinspritzeinrichtung einer Brennkraftmaschine, mit einem Durchflussregelventil (48) und einem elektromagnetischen Aktor (46) zu dessen Betätigung, wobei der Aktor (46) einen in einem Gehäuse (50) innerhalb einer Magnetspule (52) verschiebbar geführten Magnetanker (60) aufweist, durch den zumindest mittelbar ein in einem an das Gehäuse (50) anschließenden Ventilgehäuse (68) geführtes Ventilglied (82) des Durchflussregelventils (48) verschiebbar ist, durch das unterschiedlich grosse Durchflussquerschnitte einstellbar sind, **dadurch gekennzeichnet, dass** in das Gehäuse (50) innerhalb der Magnetspule (52) eine Hülse (54) eingesetzt ist, die sich zumindest annähernd über die gesamte Länge des Magnetankers (60) erstreckt und in der der Magnetanker (60) geführt ist.

2. Durchflussregeleinrichtung nach Anspruch 1, **dadurch gekennzeichnet, dass** die Hülse (54) topfförmig ausgebildet ist und mit ihrem Boden (55) vom Ventilgehäuse (68) wegweist.

3. Durchflussregeleinrichtung nach Anspruch 2, **dadurch gekennzeichnet, dass** das Ventilgehäuse (68) von deren offenen Seite her in die Hülse (54) hineinragt und dass zwischen dem Ventilgehäuse (68) und der Hülse (54) ein Dichtelement angeordnet ist.

4. Durchflussregeleinrichtung nach einem der Ansprüche 1 bis 3, **dadurch gekennzeichnet, dass** die Hülse (54) aus Bronze oder Stahl besteht.
